# EUROPEAN PATENT APPLICATION

(11) **EP 1 617 630 A1**
(43) Date of publication of application: **18.01.2006**
(21) Application number: 04016764.5
(22) Date of filing: 15.07.2004
(51) Int. Cl.: H04M 1/02, H04M 1/23

(54) **Rotatable and double sided keyboard for a foldable mobile communication device**

(71) Applicant: Research In Motion Limited, Waterloo, Ontario N2L 3W8 (CA)
(72) Inventor: Fyke, Steven H., waterloo, Ontario, N2J 4T3,CA (CA); Griffin, Jason T., Waterloo, Ontario N2T 2J5, CA (CA)
(74) Representative: Jones Day

(57) **Abstract**

An input device for mobile device (400) comprising a telephone keypad (414) arranged on one side of the input device for providing an input signal corresponding to telephone characters (426), a keyboard arranged on the opposite side of the input device for providing an input signal corresponding to text characters (430), and a connector (410) for attaching the keyboard to the mobile device for rotating between a first position of the input device and a second position of the input device around a rotation axis. With the addition of a flip axis to the connector, the telephone keypad is operable and the keyboard sits on main body of the mobile device when the input device is in the first position, and the keyboard is operable and the input device sits on the main body of the mobile device when the keyboard is in the second position.

## Description

### FIELD OF THE APPLICATION

The present application relates generally to mobile communication devices. More particularly, the present application relates to an input device for such mobile devices.

### BACKGROUND OF THE APPLICATION

Mobile devices that include a combined text-entry keyboard and a telephone keypad are known. Examples of such mobile devices include cellular telephones, wireless personal digital assistants (PDAs), two-way messaging devices and others. Some mobile devices provide the capabilities to combine a cellular telephone, a two-way messaging device and a PDA. A few mobile devices involve keyboard arrangements and combination of a text entry keyboard (e.g. QWERTY-style keyboard) with a telephone keypad provided on the same mobile device. Ergonomic comfort and how to conduct fast and accurate text entry for e-mail, messaging, notes and other applications, as well as ease of use for telephone, are main concerns.

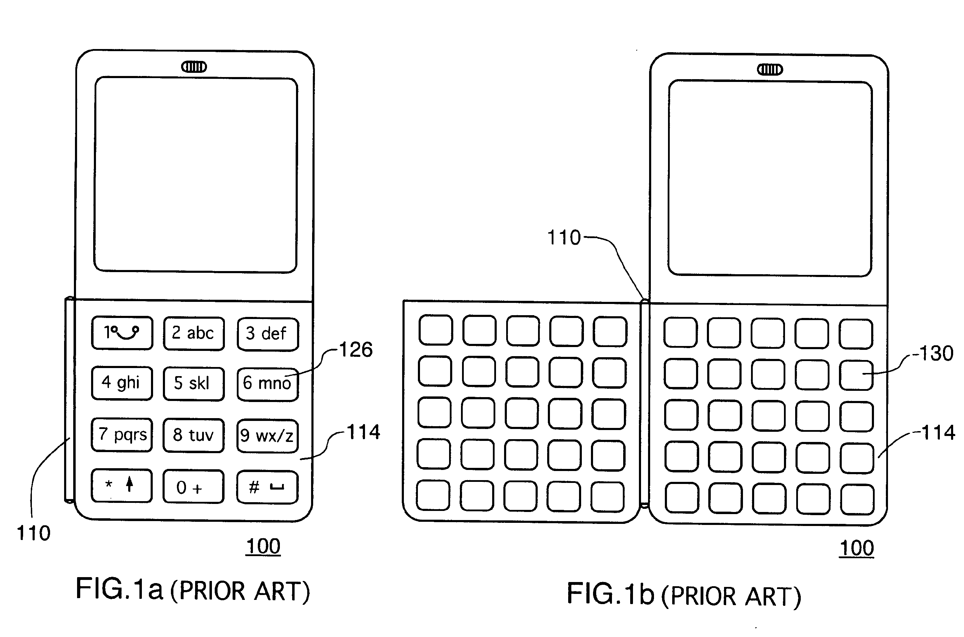

Figs. 1a and 1b illustrate a known mobile device 100 featuring an input device 114 capable of providing a keyboard 130 and keypad 126. Fig. 1a shows device 114 in a closed telephone position whereat keypad 126 is manipulable. Hinge 110 segments the input device 114 to enable the keypad 126 to flip out to the left and reveal the keyboard 130. Fig. 1b illustrates the mobile device 100 with the keypad 126 flipped out so that input device 114 is in an open text entry position whereat keyboard 130 is manipulable. The keyboard 130 is split into two portions by the hinge 110, whereby the first portion is integral to the mobile device 100 and the second portion is provided on the part that flips out.

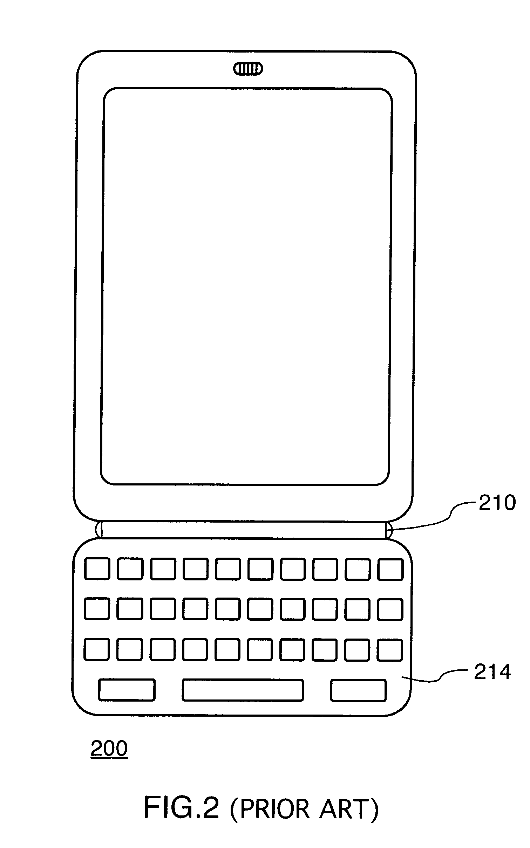

Fig. 2 shows a known mobile device 200 featuring a flip out keyboard 214. The keyboard 214 is attached to the main body of the mobile device 200 with hinge 210.

It may be awkward to do text entry with either of the keyboards shown in Figs. 1 and 2. Furthermore, the keyboard shown in Fig. 2 may not be an acceptable solution as a telephone.

### SUMMARY OF THE APPLICATION

It is an object of the present application to obviate or mitigate at least one disadvantage of existing input devices used with mobile devices.

It is a further object to provide flexibility in the manipulation of keyboards and keypads used with mobile devices.

In a first aspect, the present application provides an input device for a mobile device comprising a telephone keypad arranged on one side of the input device for providing an input signal corresponding to at least one telephone character, a keyboard arranged on the opposite side of the input device for providing an input signal corresponding to at least one text character. The telephone keypad is operable when the input device is in the first position, and the keyboard is operable when the input device is in the second position.

In a second aspect, the present application provides a mobile device comprising of an input device having a telephone keypad arranged on one side of the input device attached to the mobile device for providing an input signal corresponding to at least one telephone character, a keyboard arranged on the opposite side of the input device for providing an input signal corresponding to at least one text character, and a microprocessor, operatively connected to the input device for determining the position of the input device and enabling the telephone keypad operable when in the first position and the keyboard operable when in the second position, and receiving the input signal from the input device, and for controlling the operation of the mobile device, and an application module, executable by the microprocessor, for providing a plurality of operational features and initiating such features upon certain inputs from the input device.

In preferred embodiments, the input device positions are provided such that the proper balance and ergonomics is achieved.

### BRIEF DESCRIPTION OF THE DRAWINGS

Embodiments of the present application will now be described, by way of example only, with reference to the attached figures, wherein:
Fig. 1a illustrates a known mobile device with a flip out input device shown in a telephone keypad position;
Fig. 1b illustrates a known mobile device with a flip out input device shown in a text entry position;
Fig. 2 illustrates a known mobile device with a flip out keyboard;
Fig. 3 is a block diagram of a mobile communication device to which the present application may be applied;
Fig. 4a is an oblique view of a mobile device with a flip out and rotatable input device shown in a telephone keypad position according to an embodiment of the present application;
Fig. 4b is an oblique view of the mobile device with the flip out and rotatable input device in a flip out position according to an embodiment of the present application;
Fig. 4c is an oblique view of the mobile device with the flip out and rotatable input device in a rotation position according to an embodiment of the present application;
Fig. 4d is an oblique view of the mobile device with the flip out and rotatable input device shown in a text entry keyboard position according to an embodiment of the present application;
Fig. 5a is an oblique view of a touch-screen mobile device with a flip out and rotatable input device shown in a telephone keypad position according to a further embodiment of the present application;
Fig. 5b is an oblique view of the touch-screen mobile device with the flip out and rotatable input device in a flip out position according to a further embodiment of the present application;
Fig. 5c is an oblique view of the touch-screen mobile device with the flip out and rotatable input device in a rotation position according to a further embodiment of the present application;
Fig. 5d is an oblique view of the touch-screen mobile device with the flip out and rotatable input device shown in a text entry keyboard position according to a further embodiment of the present application;
Fig. 6 is an outline of an exemplary 2-axis hinge used with the flip out and rotatable input devices for mobile devices according to the present application;
Fig. 7 is an exemplary QWERTY keyboard layout used with the mobile device according to present application;
Fig. 8a is an oblique view of a mobile device with a rotatable input device shown in a telephone keypad position according to a further embodiment of the present application;
Fig. 8b is an oblique view of the mobile device with the rotatable input device shown in a rotation position according to a further embodiment of the present application;
Fig. 8c is an oblique view of the mobile device with the rotatable input device shown in a text entry keyboard position according to a further embodiment of the present application.

### DETAILED DESCRIPTION

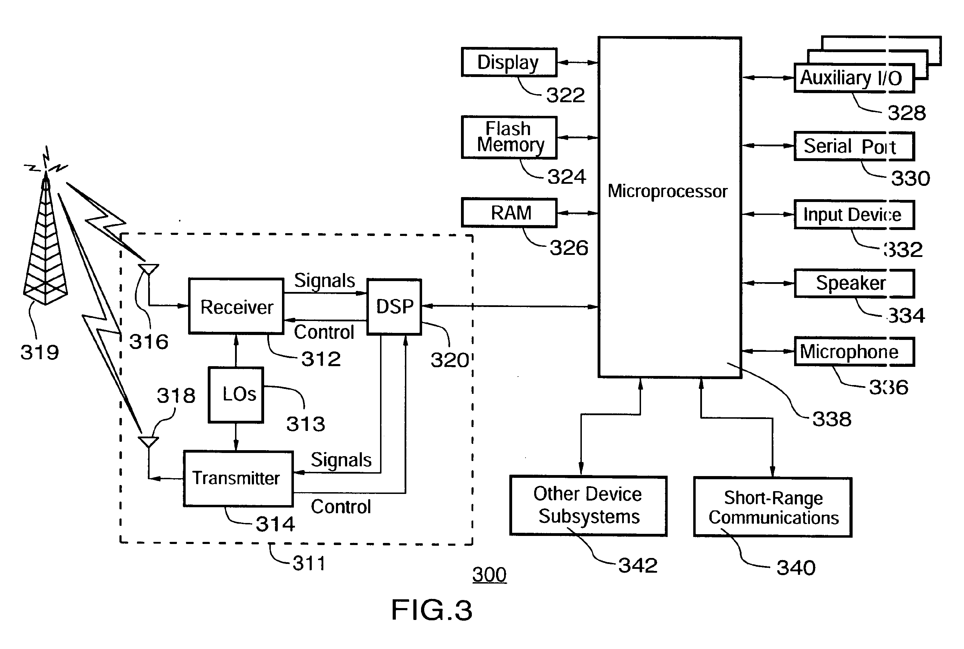

Referring now to the drawings, Fig. 3 is a block diagram of a mobile communication device 300 to which the subject matter of the present application may be applied. The mobile communication device 300 is preferably a two-way communication device having at least voice and data communication capabilities. The device preferably has the capability to communicate with other computer systems on the Internet. Depending on the functionality provided by the device, the device may be referred to as a data messaging device, a two-way pager, a cellular telephone with data messaging capabilities, a cellular telephone with two-way messaging capabilities and personal digital assistant capabilities, personal digital assistant, a wireless Internet appliance or a data communication device.

Where the device 300 is enabled for two-way communications, the device will incorporate a communication subsystem 311, including a receiver 312, a transmitter 314, and associated components such as one or more, preferably embedded or internal, antenna elements 316 and 318, local oscillators 313, and a processing module such as a digital signal processor (DSP) 320. As will be apparent to those skilled in the field of communications, the particular design of the communication subsystem 311 will be dependent upon the communication network in which the device is intended to operate. For example, a device 300 destined for a North American market may include a communication subsystem 311 designed to operate within the Mobitex™ mobile communication system, DataTAC™ mobile communication system, or 1X CDMA based data networks, whereas a device 300 intended for use in Europe may incorporate a General Packet Radio Service (GPRS) communication subsystem 311.

Network access requirements will also vary depending upon the type of network 319. For example, in the Mobitex and DataTAC networks, mobile devices such as device 300 are registered on the network using a unique personal identification number or PIN associated with each device. In GPRS networks however, network access is associated with a subscriber or user of a device 300. A GPRS device therefore requires a subscriber identity module (not shown), commonly referred to as a SIM card, in order to operate on a GPRS network. Without a SIM card, a GPRS device will not be fully functional. Local or non-network communication functions (if any) may be operable, but the device 300 will be unable to carry out any functions involving communications over network 319. When required network registration or activation procedures have been completed, a device 300 may send and receive communication signals over the network 319. Signals received by the antenna 316 through a communication network 319 are input to the receiver 312, which may perform such common receiver functions as signal amplification, frequency down conversion, filtering, channel selection and the like, and in the example system shown in Fig. 3, analog to digital conversion. Analog to digital conversion of a received signal allows more complex communication functions such as demodulation and decoding to be performed in the DSP 320. In a similar manner, signals to be transmitted are processed, including modulation and encoding for example, by the DSP 320 and input to the transmitter 314 for digital to analog conversion, frequency up conversion, filtering, amplification and transmission over the communication network 319 via the antenna 318.

The DSP 320 not only processes communication signals, but also provides for receiver and transmitter control. For example, the gains applied to communication signals in the receiver 312 and transmitter 314 may be adaptively controlled through automatic gain control algorithms implemented in the DSP 320.

The device 300 preferably includes a microprocessor 338 that controls the overall operation of the device. Communication functions, preferably including at least data and voice communications, are performed through the communication subsystem 311. The microprocessor 338 also interacts with further device subsystems such as the display 322, flash memory 324, random access memory (RAM) 326, auxiliary input/output (I/O) subsystems 328, serial port 330, input device 332, speaker 334, microphone 336, a short-range communications subsystem 340 and any other device subsystems generally designated as 342.

Some of the subsystems shown in Fig. 3 perform communication-related functions, whereas other subsystems may provide "resident" or on-device functions. Notably, some subsystems, such as input device 332 according to the present application and display 322 for example, may be used for both communication-related functions, such as making a telephone call and entering a text message for transmission over a communication network, and device-resident functions such as a calculator or task list.

Operating system software used by the microprocessor 338 is preferably stored in a persistent store such as flash memory 324, which may instead be a read only memory (ROM) or similar storage element (not shown). Those skilled in the art will appreciate that the operating system, specific device applications, or parts thereof, may be temporarily loaded into a volatile store such as RAM 326. It is contemplated that received communication signals may also be stored to RAM 326.

The microprocessor 338, in addition to its operating system functions, preferably enables execution of software applications on the device. A predetermined set of applications which control basic device operations, including data and voice communication applications for example, will normally be installed on the device 300 during manufacture. A preferred application that may be loaded onto the device may be a personal information manager (PIM) application having the ability to organize and manage data items relating to the device user such as, but not limited to e-mail, calendar events, voice mails, appointments, and task items. Naturally, one or more memory stores would be available on the device to facilitate storage of PIM data items on the device. Such PIM application would preferably have the ability to send and receive data items, via the wireless network. In a preferred embodiment, the PIM data items are seamlessly integrated, synchronized and updated, via the wireless network, with the device user's corresponding data items stored or associated with a host computer system thereby creating a mirrored host computer on the mobile device with respect to the data items at least. This would be especially advantageous in the case where the host computer system is the mobile device user's office computer system. Further applications may also be loaded onto the device 300 through the network 319, an auxiliary I/O subsystem 328, serial port 330, short-range communications subsystem 340 or any other suitable subsystem 342, and installed by a user in the RAM 326 or preferably a non-volatile store (not shown) for execution by the microprocessor 338. Such flexibility in application installation increases the functionality of the device and may provide enhanced on-device functions, communication-related functions, or both. For example, secure communication applications may enable electronic commerce functions and other such financial transactions to be performed using the device 300.

In a data communication mode, a received signal such as a text message or web page download will be processed by the communication subsystem 311 and input to the microprocessor 338, which will preferably further process the received signal for output to the display 322, or alternatively to an auxiliary I/O device 328. A user of device 300 may also compose data items such as email messages for example, using the input device 332 according to the present application, which is a complete alphanumeric keyboard on one side and a telephone-type keypad on the opposite side, in conjunction with the display 322 and possibly an auxiliary I/O device 328. Such composed items may then be transmitted over a communication network through the communication subsystem 311.

For voice communications, overall operation of the device 300 is substantially similar, except that received signals would preferably be output to a speaker 334 and signals for transmission would be generated by a microphone 336. Alternative voice or audio I/O subsystems such as a voice message recording subsystem may also be implemented on the device 300. Although voice or audio signal output is preferably accomplished primarily through the speaker 334, the display 322 may also be used to provide an indication of the identity of a calling party, the duration of a voice call, or other voice call related information for example.

The serial port 330 in Fig. 3 would normally be implemented in a personal digital assistant (PDA)-type communication device for which synchronization with a user's desktop computer (not shown) may be desirable, but is an optional device component. Such a port 330 would enable a user to set preferences through an external device or software application and would extend the capabilities of the device by providing for information or software downloads to the device 300 other than through a wireless communication network. The alternate download path may for example be used to load an encryption key onto the device through a direct and thus reliable and trusted connection to thereby enable secure device communication.

A short-range communications subsystem 340 is a further optional component which may provide for communication between the device and different systems or devices, which need not necessarily be similar devices. For example, the subsystem 340 may include an infrared device and associated circuits and components or a Bluetooth™ communication module to provide for communication with similarly enabled systems and devices.

Thus, it will be apparent that mobile devices of this type perform a wide variety of complex functions and it is a challenge to provide an input device which is sufficiently compact to match the form factor of the handheld device but which provides the necessary level of functionality required by the user.

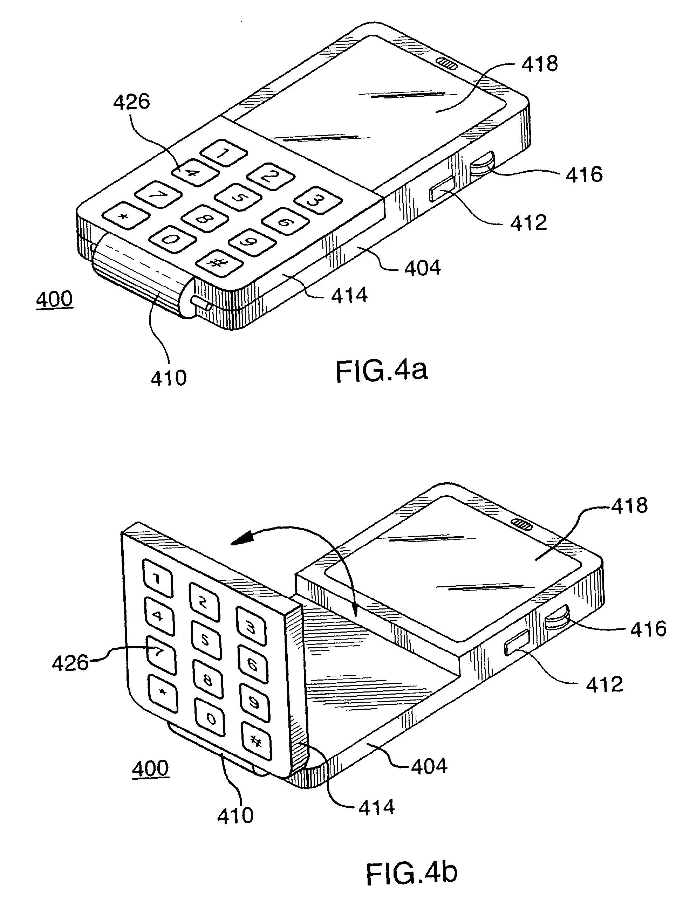

Fig. 4a is an oblique view of a mobile device 400 with a flip out and rotatable input device 414 shown in a telephone keypad position according to an embodiment of the present application. The input device 414 is mounted to the mobile device 400 by a connector 410 such as a 2-axis hinge. One side of the input device 414 is a telephone keypad, and the opposite side of the input device 414 is a text entry keyboard such as a QWERTY keyboard. As shown in Fig. 4a, the input device 414 sits on the main body 404 of the mobile device 400 so that a telephone keypad 426 faces up. In this position, the telephone keypad 426 is activated and the mobile device 400 provides telephone-related functions. The telephone keypad 426 includes four rows of three buttons. The first three rows are typically formed from the numbers 1-9, arranged left to right, top to bottom, in an increasing order. The fourth row is formed from the keys '*' '0' and '#'. Alphabetic values are ascribed to keys 2-9 in a standardized alphabetic order. Although not expressly shown in the drawing, it is envisaged that SEND and END keys or other such inputs typical in telephony can also be provided in combination with the telephony keypad. In this telephony position, the input device 414 maintains a firm contact with main body 404 of the mobile device 400 so as to provide a good balance while it is used to enter telephony input. The user can perform fast and exact dialing by manipulating the telephony keypad 426.

When the telephone keypad 426 faces up, the mobile device 400 may display a user interface including telephone-related applications or functions on a screen 418. An auxiliary input device such as a thumbwheel 416 is used to navigate on the screen such as moving a cursor on the screen 418 to select an application like checking voice-mail and other menu-based functions. When a call is incoming, the screen 418 displays the options "answer call" and "ignore call". The thumbwheel 416 is used to select one option and handle the incoming telephone call. An escape key 412 may be pressed to hang up a telephone call.

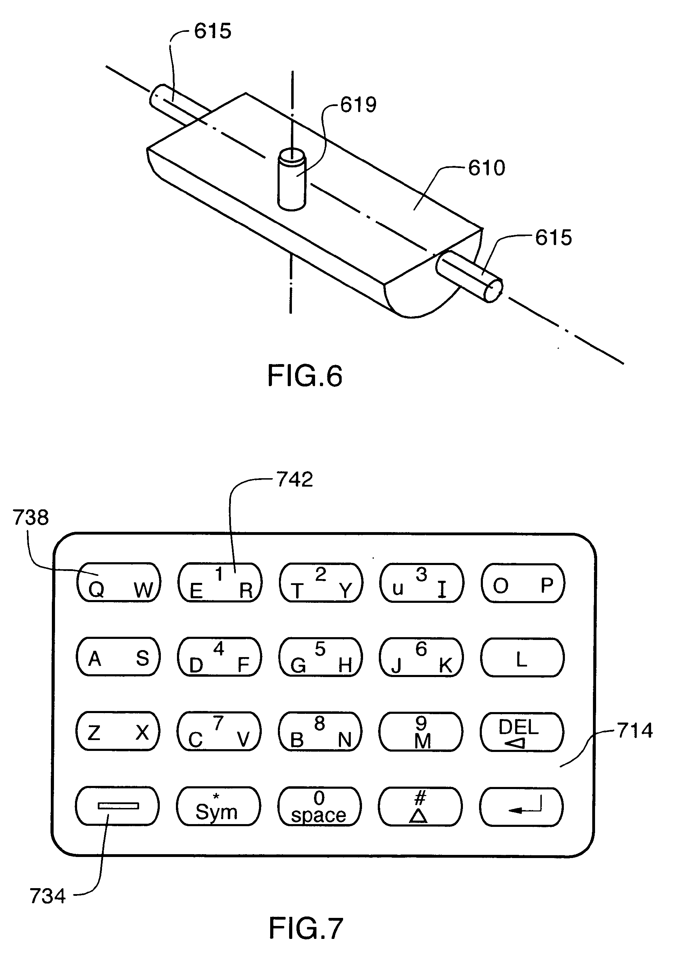

In this embodiment, the connector 410 is a 2-axis hinge as shown in Fig.6. The hinge comprises a first axis and a second axis. The first axis is perpendicular to the second axis. The input device turns around the first axis to flip open from main body of the mobile device, and rotates around the second axis, and then flips back onto the main body of the mobile device to reveal the QWERTY keyboard for text entry. There are many options for the connector, which are known to those of skill in the art.

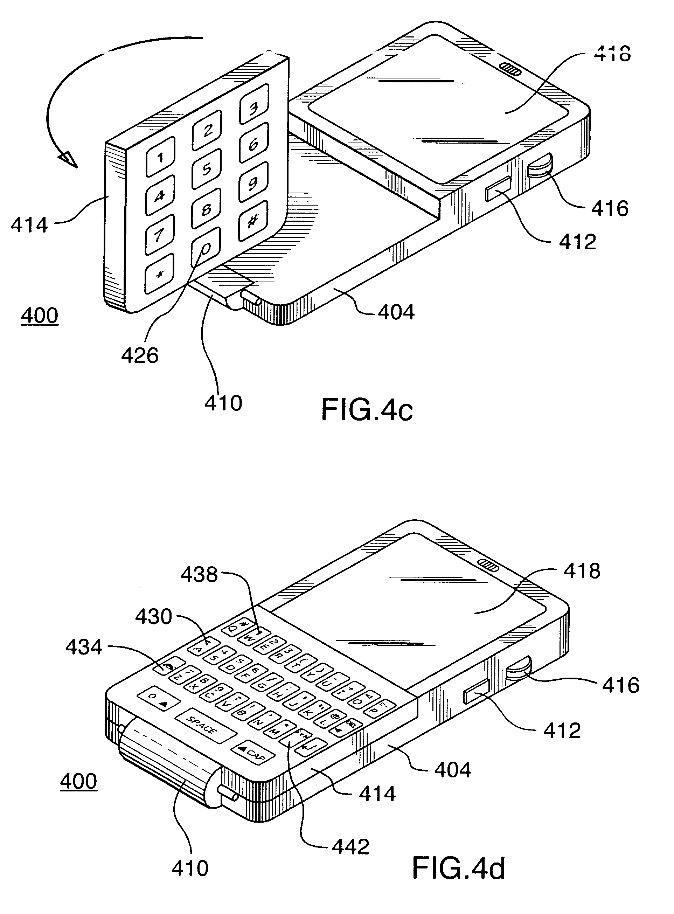

Fig. 4b is an oblique view of the mobile device 400 with the flip out and rotatable input device 414 in a flip out position according to an embodiment of the present application. The input device 414 is flipped up around a first axis or a flip axis for flipping and then rotated in a clock-wise direction or in a counter-clockwise direction around a second axis or rotation axis. Fig. 4c shows an oblique view of the mobile device 400 with the flip out and rotatable input device 414 in a rotation position according to an embodiment of the present application. The first axis is perpendicular to the second axis.

Fig. 4d is an oblique view of the mobile device 400 with the flip out and rotatable input device 414 shown in a text entry keyboard position according to an embodiment of the present application. The input device 414 is flipped back in place and faced up after a process of flip out and rotation as shown in Fig. 4b and Fig. 4c. In this keyboard position, the input device 414 maintains a firm contact with main body 404 of the mobile device 400 so as to provide a good balance while it is used to enter text characters. The user can perform fast and exact text entry by manipulating the QWERTY keyboard.

When the QWERTY keyboard 430 faces up, correspondingly the keyboard 430 is activated, and the mobile device 400 can display a user interface including data-related applications and functions such as email-related functions, taking notes, Internet access, calendar, to-do list and others. The thumbwheel 416 is rotated to navigate on the screen 418 for data-related functions. For example, causing a cursor to move in order to select and perform a function. The escape key 412 can be pressed for exiting a function.

When a QWERTY keyboard 430 faces up, an incoming call can still be picked up, as can an outgoing call be made. For incoming calls, the screen 418 displays the options "answer call" and "ignore call", whereas for outgoing calls the keyboard 430 can be used for number dialing or for dial by name. Similarly, when the telephone keypad 426 faces up, an email can be checked by manipulating the thumbwheel 416.

Preferably, the QWERTY keyboard 430 is a thumb keyboard so as to provide greater ergonomic comfort to a user when entering text. Text-entry characters could alternatively be arranged in other keyboard patterns, such as a DVORAK style keyboard, an alphabetic style keyboard, a QWERTZ style keyboard, an AZERTY style keyboard, or the like.

The mobile device 400 preferably displays a telephone-related user interface when the telephone keypad 426 faces up, and a text-entry related user interface when the QWERTY keyboard 430 faces up. Those of skill in the art can appreciate that a variety of sensing means, such as induction, opto-mechanical, or electro-mechanical contacts, may be used to determine which of keypad 426 or keyboard 430 faces up. The keypad 426 or keyboard 430 facing up is activated, and receives key input from the keypad or keyboard activated. The other one facing down is deactivated, and key input from it is not available. Alternatively, the mobile device 400 may display a user interface including telephone-related functions and data-related functions whenever the telephone keypad 426 or the QWERTY keyboard 430 is facing up.

In the embodiment, each key corresponds to one or more alphabetic characters, or corresponds to one or more alphanumeric characters as shown in Fig. 7 so that the numbers of keys may be reduced and the mobile device 400 can be more compact. The input device 414 may also include other non-alphanumeric, or command, keys such as a symbol key 442. Such a key may access symbols or alternative functions when depressed in conjunction with the depression of another key or an auxiliary input such as the thumbwheel 416. A command key 434 is provided to access upper case letters when this command key 434 and a key with an upper letter are depressed in sequence. For example, if a user intends to input character "W", the user just presses a key 438 whereat if a user intends to input number "1", the user press the command key 434 and then press the key 438.

Alternatively, when the input device 414 is in a text entry position, the mobile device 400 can perform telephone functions. For example, by manipulation of the thumbwheel 416, the telephone functions displayed on the screen 418 can be selected. The input device 414 can be used to input telephone characters.

Depending on the user's preference and telephone use frequency, the user can set the telephone keypad of the input device 414 to face up normally. Since keys of the telephone keypad are bigger than keys of the keyboard, and since the telephone keypad layout is familiar to most users, it is advantageous to use the telephone keypad to make telephone calls.

According to present application, the keyboard of the mobile device can be used flexibly by changing keyboard positions around a 2-axis hinge between a telephone keypad and a text entry keyboard to meet different user's needs, and it makes use of the mobile device more interesting for users.

Alternatively, instead of a thumbwheel 418 and an escape key 412 on the side of the mobile device, a navigation key for navigating on a screen, and a key for picking up and hanging up telephone calls and exiting function may be arranged on the surface of the mobile device between the screen and the input device, the keypad, or the keyboard.

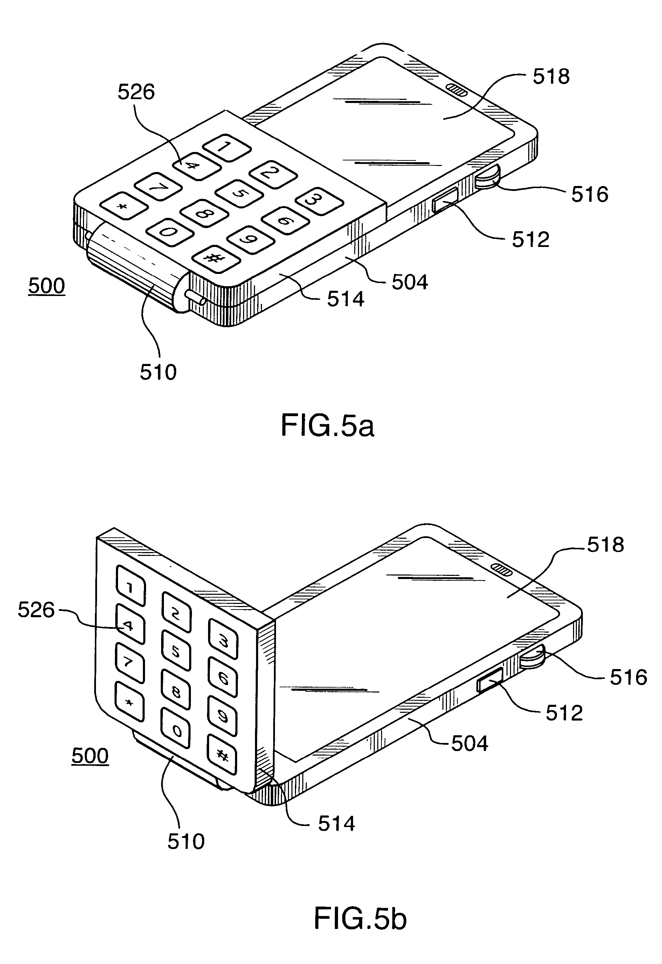

Fig. 5a is an oblique view of a mobile device 500 with a flip out and rotatable input device 514 shown in a telephone keypad position according to a further embodiment of the present application. The mobile device 500 is provided with a touch screen 518. The touch screen 518 may be a touch sensitive liquid crystal display screen. A touch pad may be displayed on the lower portion of the screen 518 which can be covered by the input device 514. When a user intends to use the touch pad to input alphabetic characters, he/she may flip out the input device 514 to make the screen 518 bigger. The input device 514 can be flipped out 180° to provide greater ergonomic comfort to the user when the touch pad is used. As shown in Fig. 5b, the input device 514 is in a flip out position. The input device 514 is an outer optional input which can be used to input telephone characters or text characters instead of the touch pad. Under this input device position, the keypad maintains a good balance for telephony signaling because it sits on and is supported by the main body 504 of the mobile device 500. The user is provided greater ergonomic comfort, and can perform fast and exact telephony signaling.

The input device 514 is mounted to the mobile device 500 by a connector 510 such as a 2-axis hinge. One side of the input device 514 is a telephone keypad, and the opposite side of the input device 514 is a QWERTY keyboard. When the input device 514 is in a position as shown in Fig. 5a, the input device 514 sits on the main body 504 of the mobile device 500, and a telephone keypad 526 is exposed and activated for entering telephone signals, and the mobile device 500 preferably provides telephone-related functions. The telephone keypad 526 is similar to that of Fig. 4a.

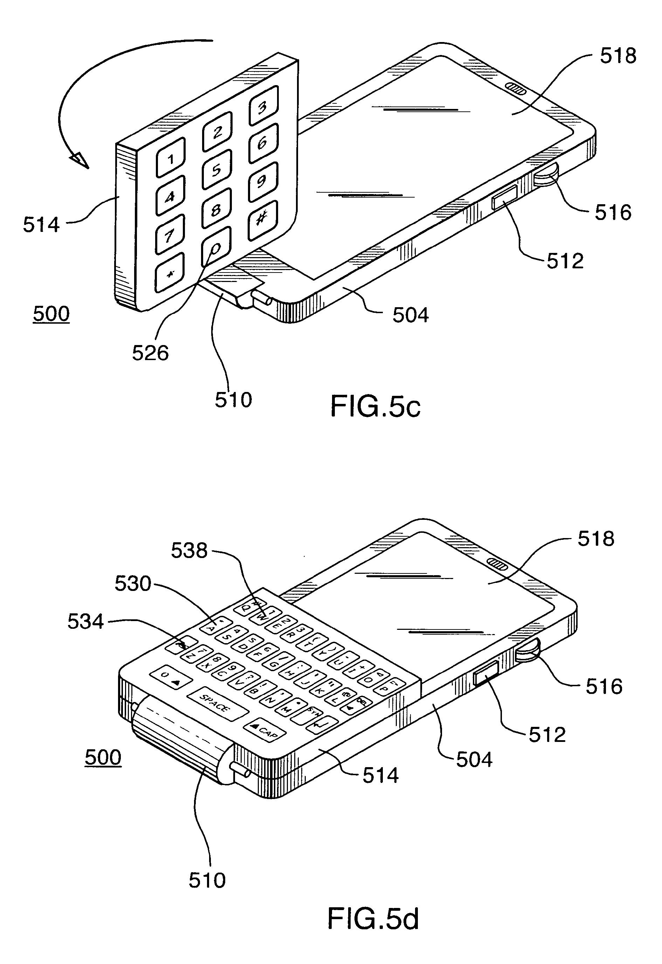

The connector 510 may be a 2-axis hinge including a first axis or a flip axis and a second axis or a rotating axis as shown in Fig. 6. By means of the flip axis, the input device can be opened. When a user intends to do text entry, he/she flips out the input device 514 as shown in Fig. 5b, and rotates it in a direction by means of the second axis as shown in Fig. 5c, and then flips the input device 514 back to reveal a QWERTY keyboard 530.

Fig. 5d shows an oblique view of the mobile device 500 with the flip out and rotatable input device 514 shown in a text entry keyboard position according to a further embodiment of the present application. Under this input device position, the text entry keyboard is activated and the telephone keypad may be deactivated. The keyboard maintains a good balance for text entry because it sits on and is supported by the main body 504 of the mobile device 500. The user is provided greater ergonomic comfort, and can perform fast and exact text-entry.

The mobile device 500 may display options about telephone-related functions such as telephone characters entry, sending and receiving telephone calls, and options about text-entry related functions such as composing, sending, and receiving email, taking notes and others on the screen 518.

Similarly to Fig. 4a- Fig. 4d, when the QWERTY keyboard 530 faces up, an incoming call still can be picked up by manipulating thumbwheel 516, or by other means. When the telephone keypad 526 faces up, an email still can be checked by means of the thumbwheel 516, or by other means.

The telephone keypad 526, the QWERTY keyboard 530, the thumbwheel 516, an escape key 512, and a command key 534 are all similar to those of Fig. 4a-4d in structures and functions. The text-entry keyboard 530 may be styled as a QWERT keyboard, a DVORAK keyboard, an alphabetic style keyboard, a QWERTZ style keyboard, a AZERTY style keyboard, and the like.

Alternatively, when the input device 514 is in a QWERTY position, the mobile device 500 can send telephone calls via manipulation of the thumbwheel 516 to select a telephone function displayed on the screen 518, or by manipulation of the keyboard 530 to type the name of a contact, or by pressing a key of keyboard 530 to utilize each key as a speed dial. The input device 514 can be used to input telephone characters as well, for example for number dialing, or to dial by name. In Fig. 5d, a command key 534 and an alphanumeric key 538 are all similar to the keys 434 and 438 in Fig. 4d.

In a further embodiment, an input device with a telephone pad on one side and a text entry keyboard on the opposite side is detachable with the main body of a mobile device. The input device may plug into the main body of the mobile device, and a user can use the telephone keypad or the text entry keyboard by rotating the input device around a connection axis to face up and activate the telephone keypad or the text entry keyboard. The mobile device is preferably a touch screen mobile device or a hand writing mobile device, and the input device can be used as an extra input device under this circumstance.

Fig. 6 illustrates an outline of an exemplary 2-axis hinge used with the flip out and rotatable input device for a mobile device according to the present application. It includes a flip axis 615, a rotation axis 619 and a main body 610. The input device is opened around the flip axis 615, and then rotated around the rotation axis 619 to reveal the telephone keypad for telephone functions or the QWERTY keyboard for text-entry and Internet access. The input device can be changed flexibly between the telephone keypad and the QWERTY keyboard. The 2-axis hinge shown Fig.6 is only an example. There are other forms for it. For example, it can include a first part such as a single axis hinge, and a second part mounted to the first part perpendicularly. There are many hinges with different structures that can be used with the keyboards of the present application. Although Fig. 6 shows one exemplary 2-axis hinge unit, the use of other 2-axis hinge units is envisaged, such as the Flexible type ST1231 hinge unit from Strawberry Corporation of Japan. According to the manufacturer's web site, "... this hinge unit is best suited for devices such as Camera Phones or Mobile Phones with TV attached. In such applications the user can view the display without opening the device. This type of hinge unit is also known as nail-cutter type hinge."

Further the person skilled in the art will appreciate that the keys on the keyboard and keypads can be combined to provide various layouts. For example, Fig. 7 shows an exemplary keyboard layout 714 used with the mobile device according to the present application. Some of keys include two text entry characters, and some of the keys include three numerical and text entry characters. For instance, a key 738 includes two associated text-entry characters "Q" and "W", and a key 742 includes number "1" and two associated text-entry characters "E" and "R". A command key 734 is used to toggle input on the three-character keys such as the key 742 between the numbers and the text entry characters. When the function key 734 and the key 742 is pressed in sequence, number "1" is input. For two-character key such as the key 738, if the left-hand portion of the key 738 is pressed, then the text entry character "Q" is input. If the right-hand portion of the key 738 is pressed, then the text entry character "W" is input. For three-character keys such as a key 742, their input is similar to those two-character keys when the function key 734 is not pressed. Alternatively, the mobile device may employ some predictive text software application in order to deduce what a user is spelling. For example, if the user were to depress the key 738, the software would determine whether the user intends to enter a "Q", or "W". Predictive text software applications are typically executed by a keystroke interpreter which receives signals generated by the depressing of either the alphanumeric or the non-alphanumeric keys and maps the received signals into a sequence of alphanumeric or the non-alphanumeric values.

A symbol key 742 provides various symbols including ".", ",", ";", """ ,"'", ":", "?", "/", ">", "<", "!", "@", "~", "$", "%", "^", "&", "(" ,")", "_" ,"-", "+" ,"=" ,"[", "]", "{", "}", "|", and "\", among other known symbols.

Other keyboard layouts may also be provided. For example, some of the keys may have three associated text entry characters.

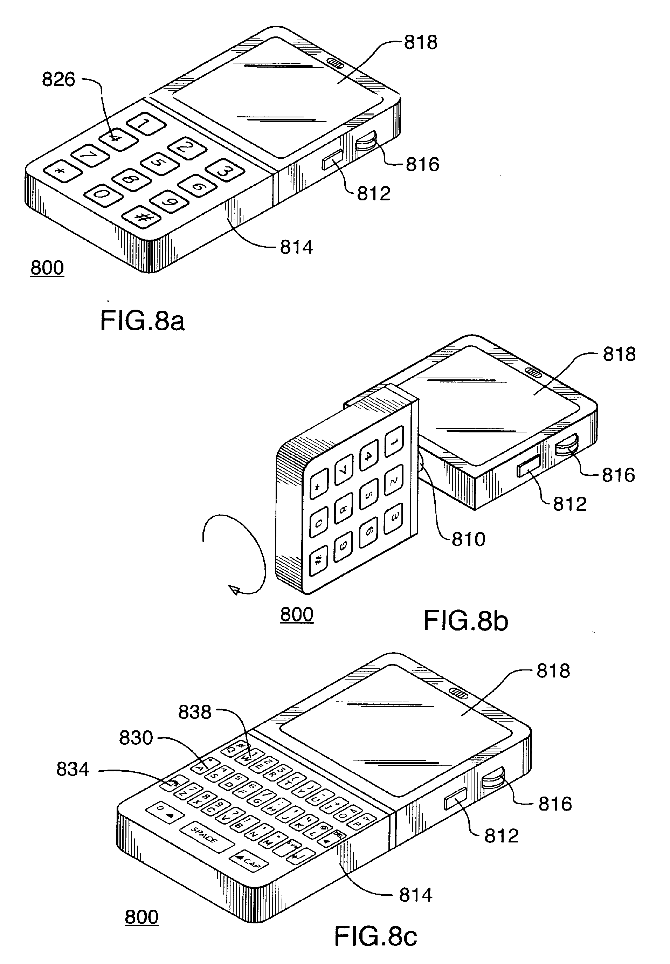

Figs. 8a-8b show a mobile device 800 with a rotatable input device 814 according to a further embodiment of the present application. The input device 814 is mounted to the mobile device 800 by a connector 810 such as an axis. One side of the input device 814 is a telephone keypad 826 as shown in Fig.8a, and the opposite side of the input device 814 is a text-entry keyboard 830 such as a QWERTY keyboard as shown in Fig. 8c. The mobile device provides telephone-related functionswhen the telephone keypad 826 faces up and is correspondingly activated, and provides text-entry related functions when the text-entry keyboard 830 faces up and is correspondingly activated. A display 818 can display a user interface as described in Figs. 4a-4d and 5a-5d.

Fig. 8b shows the mobile device 800 with the rotatable input device 814 in a rotation position. By rotating the input device 814, the telephone keypad 826 and the text-entry keyboard 830 face up alternatively for a user to use them.

Those of skill in the art will appreciate that a variety of sensing means, such as induction, opto-mechanical, or electro-mechanical contacts, may be used to determine which of keypad 826 or keyboard 830 faces up. For example, a sensing mean such as a electro-mechanical contact can be connected to the connector 810. By detecting a change of its position, a microprocessor of the mobile device 800 determines which of keypad 826 or keyboard 830 faces up, and correspondingly enable the keypad 826 or keyboard 830 facing up to receive key input, and disable the other one facing down to make key input unavailable.

Other aspects of this embodiment including a command key 834, an alphanumeric key 838, a thumbwheel 816, and an escape key 812 are all similar to those of the mobile devices in Figs.4a-4d and Figs.5a-5d. They are not described further herein.

The above-described embodiments of the present application are intended to be examples only. Alternations, modifications and variations may be effected to the particular embodiments by those of skill in the art without departing from the scope of the application, which is defined solely by the claims appended hereto.

## Claims

1. An input device for a mobile device comprising:
a telephone keypad arranged on one side of the input device for providing an input signal corresponding to at least one telephone character;
a keyboard arranged on the opposite side of the input device for providing an input signal corresponding to at least one text character,
wherein the telephone keypad is operable when the input device is in the first position, and the keyboard is operable when the input device is in the second position.

2. The input device of claim 1, further comprising a connector for attaching the input device to the mobile device for rotating between a first position of the input device and a second position of the input device around a rotation axis.

3. The input device of claim 1 or 2, wherein the input device is supportable by the main body of the mobile device when in at least one of said first position and said second position.

4. The input device of claim 2, wherein the connector further attaches the input device to the mobile device for flipping between one of said first and second positions of the input device to a third position of the input device around a flip axis, wherein the input device is rotatable when in the third position.

5. The input device of claim 4, wherein the flip axis and the rotation axis are provided by the connector, and the flip axis is substantially perpendicular to the rotation axis.

6. The input device of claim 4, wherein the first position and the second position are changed over by flipping out the input device around the flip axis, rotating around the rotation axis, and flipping back to main body of the mobile device around the flip axis.

7. The input device according to one of the claims 2 to 6, wherein the connector comprises at least a horizontal part and a vertical part.

8. The input device according to one of the claims 2 to 7, wherein the connector comprises a 2-axis hinge.

9. The input device according to one of the claims 2 to 7, wherein the connector comprises a single axis hinge, and a joint part vertically connected to the single axis hinge.

10. The input device according to one of the claims 1 to 9, wherein the keyboard is a QWERTY layout keyboard.

11. The input device according to one of the claims 1 to 9, wherein the keyboard is a Dvorak layout keyboard.

12. The input device according to one of the claims 1 to 9, wherein the keyboard is a QWERTZ layout keyboard.

13. The input device according to one of the claims 1 to 9, wherein the keyboard is an AZERTY layout keyboard.

14. The input device according to one of the claims 2 to 13, further comprising means operatively connected to the connector for detecting the position of the input device.

15. The input device according to one of the claims 1 to 14, wherein the keyboard is disabled when the telephone keypad is operable, and the telephone keypad is disabled when the keyboard is operable.

16. The input device according to one of the claims 1 to 15, wherein the input device is detachable with the mobile device.

17. The input device according to one of the claims 1 to 16, wherein the mobile device is a touch screen mobile device.

18. The input device according to one of the claims 1 to 17, wherein the mobile device is hand writing screen mobile device.

19. The input device according to one of the claims 1 to 18, wherein the keyboard includes
a plurality of alphanumeric keys, each alphanumeric key corresponding to a plurality of alphanumeric values, each key for providing an input signal corresponding to at least one of the corresponding alphanumeric values of the key,
a command key for providing an input signal corresponding to a command key value;
a keyboard interpreter for receiving the signals provided from the plurality of alphanumeric keys, and the command key, for mapping the received signals to a sequence of alphanumeric and command values.

20. The input device of claim 19, further comprises the plurality of alphabetic keys, each alphabetic key corresponding to at least one alphabetic value, each key for providing an input signal corresponding to at least one alphabetic value of the key.

21. The input device of claim 19 or 20, wherein the keystroke interpreter employs predictive text routines for mapping the received signals to a sequence of alphanumeric and command values.

22. A mobile device comprising:
an input device having a telephone keypad arranged on one side of the input device attached to the mobile device for providing an input signal corresponding to at least one telephone character, a keyboard arranged on the opposite side of the input device for providing an input signal corresponding to at least one text character;
a microprocessor, operatively connected to the input device for determining the position of the input device and enabling the telephone keypad operable when in the first position and the keyboard operable when in the second position, and receiving the input signal from the input device, and for controlling the operation of the mobile device; and
an application module, executable by the microprocessor, for providing a plurality of operational features and initiating such features upon certain inputs from the input device.

23. The mobile device of claim 22, further comprising a connector for attaching the input device to the mobile device for rotating between a first position of the input device and a second position of the input device around a rotation axis.

24. The mobile device of claim 22 or 23, wherein the input device is supportable by the main body of the mobile device when in at least one of said first position and said second position.

25. The mobile device according to one of the claims 23 to 24, wherein the connector further attaches the input device to the mobile device for flipping between one of said first and second positions of the input device to a third position of the input device around a flip axis, wherein the input device is rotatable when in the third position.

26. The mobile device of claim 25, wherein the flip axis and the rotation axis are provided by the connector, and the flip axis is substantially perpendicular to the rotation axis.

27. The mobile device of claim 25, wherein the first position of the input device and the second position of the input device are interchanged by flipping out the input device around the flip axis, rotating around the rotation axis, and flipping back to main body of the mobile device around the flip axis.

28. The mobile device according to one of the claims 23 to 27, further comprising means operatively connected to the input device for detecting the position of the input device.

29. The mobile device according to one of the claims 22 to 28, wherein when the input device is in the first position, telephone-related functions are provided, and when the input device is in the second position, data-related functions are provided.

30. The mobile device according to one of the claims 22 to 29, wherein checking email function is activated when the telephone keypad is operable.

31. The mobile device according to one of the claims 22 to 30, wherein the input device is detachable with the mobile device.

32. The mobile device according to one of the claims 22 to 31, further including a display.

33. The mobile device of claim 32, wherein the display is a touch screen display.

34. The mobile device according to one of the claims 32 to 33, wherein the display is a hand writing display.

35. The mobile device according to one of the claims 32 to 34, wherein the display displays a user interface including telephone-related functions when the input device is in the first position, and displays a user interface including data-related functions when the input device is in the second position.

36. The mobile device according to one of the claims 32 to 35, wherein the display displays a user interface including telephone-related functions and data-related functions.

37. The mobile device according to one of the claims 22 to 36, wherein the mobile device is a two-way wireless communications device having at least voice and data communication capabilities.

38. The mobile device according to one of the claims 22 to 37, wherein the mobile device is one of the group consisting of a cellular telephone with two-way messaging capabilities and personal digital assistant capabilities, a data messaging device, a two-way pager, wireless Internet appliance and a personal digital assistant.

39. The mobile device according to one of the claims 22 to 38, further comprising an auxiliary input device.

40. The mobile device of claim 39, wherein the auxiliary input device is a thumbwheel.

41. The mobile device according to one of the claims 22 to 40, further comprising an escape key.

42. The mobile device of claim 41, wherein the escape key provides an input signal for hanging up a telephone call.
